**Europäisches Patentamt**

**European Patent Office**

**Office européen des brevets**

(11) Veröffentlichungsnummer: **0 016 500**
**B1**

(12) EUROPÄISCHE PATENTSCHRIFT

(45) Veröffentlichungstag der Patentschrift:
**02.03.83**

(51) Int. Cl.³: **A 22 C 11/02**, A 22 C 13/00

(21) Anmeldenummer: **80200234.5**

(22) Anmeldetag: **13.03.80**

(54) Vorrichtung zum vorbereitenden Behandeln von gerafften Kunstdarmhüllen.

(30) Priorität: **16.03.79 DE 2910476**

(43) Veröffentlichungstag der Anmeldung:
**01.10.80 Patentblatt 80/20**

(45) Bekanntmachung des Hinweises auf die Patenterteilung:
**02.03.83 Patentblatt 83/9**

(84) Benannte Vertragsstaaten:
**AT CH DE FR GB IT NL SE**

(56) Entgegenhaltungen:
**CH-A-350 930**
**CH-A-580 388**
**CH-A-598 766**
**DE-A-2 124 282**
**DE-B-1 165 480**
**FR-A-2 101 614**
**FR-A-2 242 031**
**FR-A-2 390 336**
**GB-A-592 715**
**US-A-1 616 971**

(73) Patentinhaber: **Niedecker, Herbert, Dipl.-Ing., Am Ellerhang 6, D-6240 Königstein 2 (DE)**

(72) Erfinder: **Niedecker, Herbert, Dipl.-Ing., Am Ellerhang 6, D-6240 Königstein 2 (DE)**

(74) Vertreter: **Fischer, Ernst, Dr., Reuterweg 14, D-6000 Frankfurt am Main 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

Vorrichtung zum vorbereitenden Behandeln von gerafften Kunstdarmhüllen

Die Erfindung bezieht sich auf eine Vorrichtung zum vorbereitenden Behandeln von gerafften Kunstdarmhüllen und zum anschließenden Beschicken eines Füllrohres eines der Füllmaschine vorgebauten Revolverkopfes mit mehreren Füllrohren, wobei dem in Füllstellung befindlichen Füllrohr eine Verschleißvorrichtung zugeordnet ist.

Insbesondere bei der Verpackung von Wurstwaren ist es bekannt, Kunstdarmhüllen oder Kunstdärme zu Raupen zu raffen und auf das Füllrohr einer Füllmaschine aufzuziehen. Der Kunstdarm wird sodann abschnittsweise mit der Wurstmasse gefüllt und dabei in der Regel von einer auf dem Füllrohr angebrachten Darmbremse abgebremst, dann abgeteilt sowie anschließend von einer Verschließmaschine verschlossen.

Vor dem Aufziehen auf das Füllrohr ist es jedoch in aller Regel erforderlich, den Kunstdarm vorzubehandeln, um ihn für das nachfolgende Füllen und Verschließen geeignet zu machen. Meist besteht dieses Vorbehandeln in einem Wässern, das sich mit der gegebenenfalls in der Kunstdarmfabrik bereits vorgenommenen Behandlung des Kunstdarmes, z. B. mit Glycerin oder anderen chemischen Mitteln, ergänzen kann. Das Wässern ist insbesondere deshalb erforderlich, weil die Kunstdärme im trockenen Zustand, d. h. im Anlieferungszustand, einen kleineren Durchmesser als im feuchten Zustand haben. Ohne Wässern würde sich der trockene Kunstdarm daher nach Einbringen der feuchten Füllmasse dehnen, so daß die erzeugte Wurst alsbald erschlaffen und unansehnlich würde. Zum Wässern wird eine Bewässerungseinrichtung benutzt.

Das deshalb durchzuführende Wässern des Kunstdarmes wird oft auch gleichzeitig zum Ausspülen von chemischen Mitteln, beispielsweise vom erwähnten Glycerin, herangezogen, die dem Kunstdarm zur Konservierung zugesetzt werden.

Die bisherigen Verfahren zum Wässern oder Befeuchten von Kunstdärmen sind zeitaufwendig und vor allem nicht zuverlässig reproduzierbar. Geraffte Kunstdarmhüllen werden hiernach etwa 20 Minuten lang in einem Wasserbad bei einer Temperatur von etwa 40°C gehalten. Da das Wässern meist in einfachen Wasserbehältern durchgeführt wird, hat sich gezeigt, daß diese Temperatur über einen längeren Zeitabschnitt nicht konstant gehalten werden kann. Auch wird das Wasser im Laufe der Zeit durch ab- und ausgewaschene Konservierungsmittel angereichert. Als Folge davon verschmutzen die den Kunstdärmen gegebenenfalls zugesetzten und nicht auszuwaschenden Gleitmittel. Die je nach Kunstdarmzusammensetzung beim Wässern erforderlichen Salzlösungen können überdies in ihrer Konzentration erheblich schwanken. Da erfahrungsgemäß die Wasserbehälter oftmals zum Spülen benutzter Geräte verwendet werden, besteht ein weiterer Nachteil darin, daß die zu wässernden Kunstdärme mit der abgewaschenen Wurstmasse in Berührung kommen.

Es sind daher weitere Verfahren und Vorrichtungen entwickelt worden, um die beim Vorbehandeln und Wässern von Kunstdärmen auftretenden Probleme auszuschalten und dabei den gesamten Herstellungsvorgang bis hin zur Verpackung weitgehend zu automatisieren. Dies ist bis auf das Füllen und Verschließen von Wursthüllen jedoch noch nicht in dem Maße vorangeschritten, daß eine hygienisch einwandfreie und zeitsparende Vorbehandlung von Kunstdarmhüllen und ein anschließendes Beschicken der Füllrohre einer Füllmaschine mit den gewässerten Kunstdarmhüllen durchführbar ist.

So ist aus der DE-OS 2 124 282 bereits eine Vorrichtung bekannt, mit der das Füllen und Verschließen von Wursthüllen weitgehend automatisiert ist. Dies wird im wesentlichen dadurch erreicht, daß eine vor der Füllmaschine angeordnete, mittels eines Kraftantriebes zwischen einer Freigabe- und einer Arbeitsstellung bewegliche und in letzterer eine an den Auslaß der Füllmaschine anschließende Tülle mit einer Darmbremse übergreifende Raff- und Clipvorrichtung koaxial zur Drehachse der Scheibe verschieblich geführt und mit einem die Peripherie der Scheibe erfassenden Anschlag verbunden ist, so daß bei automatisiertem Betrieb eine wechselseitige Steuerung zwischen der Wurstfüllmaschine und der Fülleinrichtung möglich ist. Der Nachteil bei dieser Vorrichtung besteht jedoch darin, daß die Wursthüllen noch von Hand auf die an der drehbaren Scheibe angeordneten Tüllen aufgezogen werden müssen. Auch können die Wursthüllen mit dieser Vorrichtung nicht gewässert werden.

In der US-PS 1 616 971 ist ein Verfahren beschrieben, wonach mit Glycerin vorbehandelte geraffte Kunstdärme auf einen Speicherdorn gebracht und auf diesem gelagert werden. Zum Füllen werden die gerafften Kunstdärme mit Hilfe einer Übergabeeinrichtung vom Speicherdorn auf ein Füllrohr überführt. Da die zum Entfernen des Glycerins notwendige Wässerung des Kunstdarmes hierbei nicht in einem Arbeitsgang mit anschließendem Füllen und Verschließen vorgenommen werden kann, wäre die Herstellung von Würsten mit getrennter Vorbehandlung von Kunstdärmen zu kostenaufwendig. Hinzu kommt, daß eine derartige Vorbehandlung aus den angeführten Gründen hygienisch nicht einwandfrei durchführbar und auch nicht zuverlässig reproduzierbar ist.

Die Aufgabe der Erfindung besteht daher darin, eine Vorrichtung der eingangs genannten Art zu schaffen, mit der eine hygienisch einwandfreie und zeitsparende Vorbehandlung von Kunstdarmhüllen bei der Nahrungsmittelverpackung derart bewerkstelligt wird, daß ausgehend von der trockenen, gerafften Kunstdarmhülle das Beschicken der Füllrohre mit gewässerten Kunstdarmhüllen durchgeführt werden kann, worauf sich das Füllen und Verschließen der Kunstdarmhüllen in üblicher Weise anschließt.

Diese Aufgabe wird erfindungsgemäß durch eine Vorrichtung der im Oberbegriff des Anspruchs 1 genannten Art gelöst, die gekennzeichnet ist durch eine der Füllmaschine zugeordneten Bewässerungseinrichtung mit mehreren Trägern zur Aufnahme der gerafften Kunstdarmhüllen, wobei die Träger mit ihrem einen Ende an einer in der Bewässerungseinrichtung umlaufenden Halterung gelagert sind, und eine Übergabeeinrichtung für die gewässerten, gerafften Kunstdarmhüllen von den Trägern auf das Füllrohr, wobei jedem Füllrohr eine mit diesem umlaufende Darmbremse zugeordnet ist, die derart verschwenkbar angeordnet ist, daß in der Übergabeposition die Darmbremse aus dem Arbeitsweg der Übergabeeinrichtung vom Füllrohr abgeschwenkt und die dem in Füllposition befindlichen Füllrohr zugeordnete Darmbremse auf letzteres aufgeschwenkt ist.

Die mit der Erfindung erzielten Vorteile sind im wesentlichen darin zu suchen, daß die erfindungsgemäße Vorrichtung relativ einfach gebaut ist, daß mehrere Träger mit ihrem einen Ende an einer in der Bewässerungseinrichtung umlaufenden Halterung gelagert sind, und daß die Übergabe einer gewässerten Kunstdarmhülle auf ein Füllrohr immer dann erfolgt, wenn in der Übergabepostion die Längsachse des jeweiligen Trägers und die Längsachse des betreffenden Füllrohres miteinander fluchten. Im Hinblick auf die angestrebte Automatisierung des Verpackungsablaufs liegt ein weiterer wichtiger Vorteil der Erfindung darin, daß für jedes Füllrohr je eine Darmbremse verschwenkbar angeordnet ist, wobei in der Übergabeposition die Darmbremse aus dem Arbeitsweg der Übergabeeinrichtung von dem Füllrohr abgeschwenkt und die dem in Füllposition befindlichen Füllrohr zugeordnete Darmbremse auf letzteres aufgeschwenkt ist.

Eine besonders kompakte Ausbildung von Bewässerungseinrichtung und Übergabeeinrichtung mit einer Füllmaschine mit mehreren in einem Revolverkopf angeordneten Füllrohren ergibt sich dann, wenn gemäß der Erfindung die sternförmige Halterung schrittweise vorzugsweise mit der doppelten Anzahl von Schritten wie Anzahl der Träger während eines Umlaufes antreibbar ist. Diese erfindungsgemäße Ausbildung ermöglicht es, die Darmbremse besonders raumsparend im Arbeitsbereich von Übergabeeinrichtung und dem mit dem zu beschickenden Füllrohr fluchtenden Träger anzuordnen, und zwar derart, daß nach einem ersten Arbeitsschritt eines Trägers die Übergabe der darauf befindlichen gewässerten Kunstdarmhülle auf das mit ihm fluchtende Füllrohr erfolgt, daß dann der leere Träger in einem zweiten Arbeitsschritt aus dem Bereich des Füllrohres herausbewegt wird, so daß die Darmbremse auf das Füllrohr aufschwenkbar ist.

Die Erfindung schafft zugleich die Voraussetzung, eine Automatisierung des Verpackungsvorganges des zu verpackenden Füllgutes voranzutreiben. Es ist deshalb vorgesehen, daß dem im Bereich der Verschleißmaschine angeordneten Füllrohr eine Greiferzange zum Erfassen und Abziehen des Anfangs der Kunstdarmhülle zugeordnet ist. Die Anordnung eines solchen Greifers führt zu dem Ergebnis, daß auch beim jeweils neuerlichen Beginn des Verpackungsvorganges mit einer neuen Kunstdarmhülle eine Handhabung des Verpackungsmaterials mit der menschlichen Hand nicht mehr erforderlich ist. Dies erbringt hygienische Vorteile, jedoch auch Vorteile im Hinblick auf die Unfallverhütung. Die Bedienungsperson braucht zum Herausziehen des Anfangs der gewässerten Kunstdarmhülle nicht mehr durch die Verschließorgane hindurch zum Füllrohr greifen, was im Falle eines Ausfalls oder einer Beschädigung des Steuermechanismus zu Handverletzungen führen könnte.

Weitere Einzelheiten, Merkmale und Vorteile der Erfindung ergeben sich aus der folgenden Beschreibung eines bevorzugten Ausführungsbeispiels, den Patentansprüchen sowie anhand der schematischen Zeichnung. Hierbei zeigt

Fig. 1 einen Längsschnitt durch eine Bewässerungsvorrichtung mit einem ihr zugeordneten Füllrohr-Revolverkopf einer nicht näher gezeigten Füllmaschine für pastöses Füllgut;

Fig. 2 einen Schnitt nach Linie II-II der Fig. 1, wobei eine Darmbremse außer Eingriff mit dem mit einer gewässerten Kunstdarmhülle zu beschickenden Füllrohr des Füllrohr-Revolverkopfes gezeigt ist;

Fig. 3 die gleiche Ansicht wie in Fig. 2 mit nunmehr auf das mit einer gewässerten Kunstdarmhülle beschickte Füllrohr aufgeschwenkte Darmbremse;

Fig. 4 eine Greiferzange, die an einer Verschleißmaschine angeordnet ist, welche ihrerseits dem jeweils füllenden Füllrohr nach Fig. 1 zugeordnet ist, wobei die Greiferzange kurz vor dem Erfassen des Anfangs der Kunstdarmhülle dargestellt ist;

Fig. 5 die gleiche Ansicht wie in Fig. 4 mit aus dem Arbeitsbereich der Verschließorgane bereits ausgewschwenkter Greiferzange und

Fig. 6 wiederum die gleiche Ansicht wie in Fig. 4 mit auch aus dem Transportweg der gefüllten Kunstdarmhülle ausgeschwenkter und geöffneter Greiferzange.

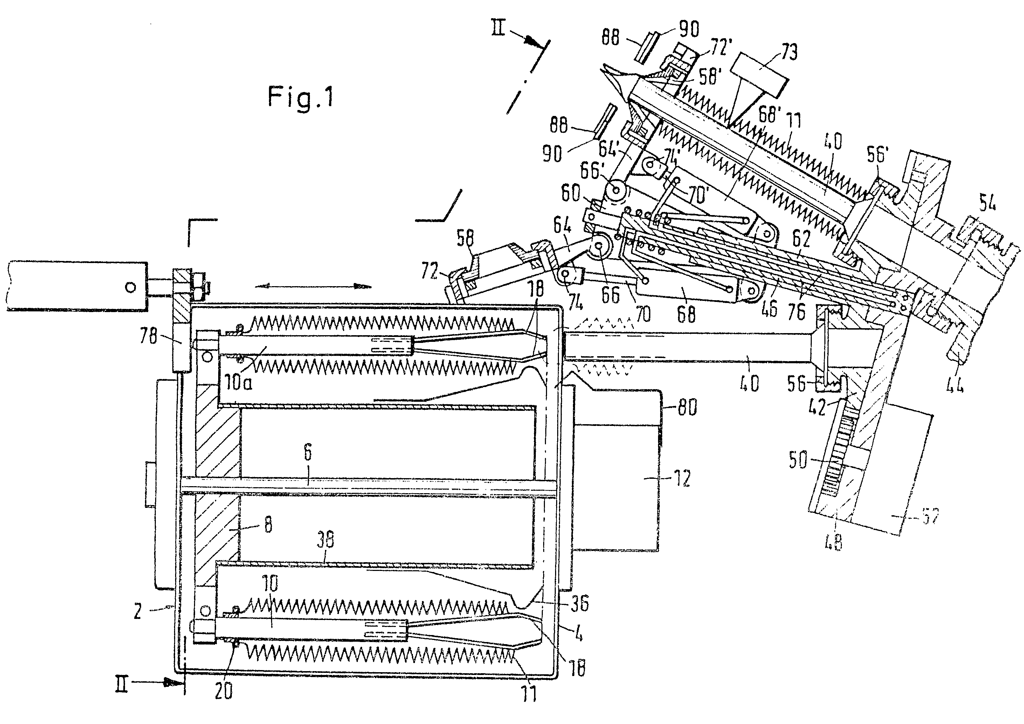

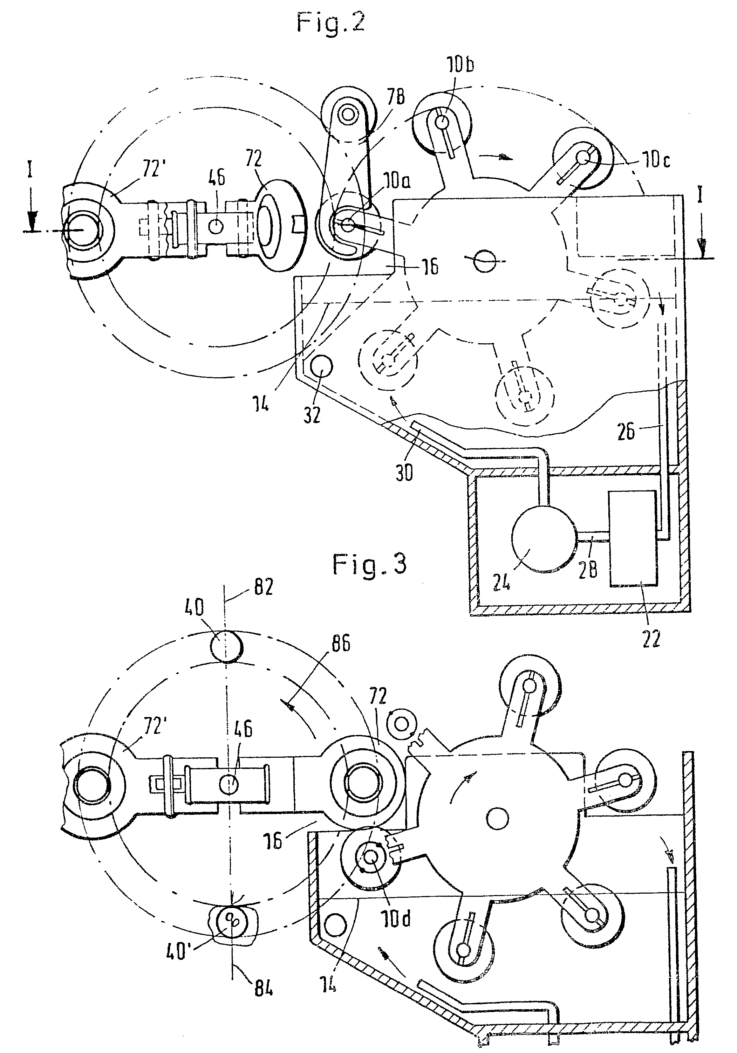

Gemäß Fig. 1 ist eine Bewässerungsvorrichtung insgesamt mit 2 bezeichnet. Sie steht im wesentlichen aus einer Wanne 4, welche eine in ihr drehbar gelagerte Welle 6 aufnimmt. Auf der Welle 6 ist eine sternförmige Halterung 8 zur Lagerung von Trägern 10 für zu wässernde Kunstdarmhüllen 11 angeordnet. Seitlich an der Wanne 4 ist ein Taktgetriebe 12 angeordnet, mit dem die Welle 6 und mit ihr die sternförmige Halterung 8 sowie die Träger 10 schrittweise antreibbar sind. Im vorliegenden Fall sind, wie aus der Zeichnung Fig. 2 ersichtlich, sechs Träger 10 vorgesehen.

Die Wanne 4 ist im wesentlichen mit einem wäßrigen Medium, beispielsweise Wasser, zum Bewässern von Kunstdarmhüllen 11 gefüllt. Der Badspiegel ist mit 14 bezeichnet.

Wie sich aus den Fig. 2 und 3 ergibt, ist die Wanne 4 im Bereich ihrer Oberkante offen; außerdem weist sie an ihren Seitenwandungen eine rechteckige Ausnehmung 16 auf, die dazu dient, wie noch erläutert werden wird, gewässerte Kunstdarmhüllen 11 von dem jeweils mit diesen Ausnehmungen fluchtenden Träger 10a auf ein Füllrohr 40 der Füllmaschine 44 zu übergeben.

Die Übergabe einer gewässerten Kunstdarmhülle 11 erfolgt beim gezeichneten Ausführungsbeispiel immer, wenn, wie erwähnt, ein Träger 10a mit einem Füllrohr 40 der Füllmaschine 44 fluchtet; im vorliegenden Fall ist dies der Träger 10a gemäß Fig. 1 und 2. Die diesem Träger 10a in Drehrichtung vorlaufenden Träger 10b und 10c ragen aus der Wanne 4 der Bewässerungseinrichtung 2 heraus und können in dieser Position bequem von Hand mit noch trockenen, zu bewässernden, gerafften Kunstdarmhüllen 11 bestückt werden.

Um einen sicheren Sitz dieser Kunstdarmhüllen 11 auf den Trägern 10 zu gewährleisten, sind diese, vgl. Fig. 1, mit mehreren Federzungen 18 bestückt, die nach außen vorgespannt sind und so nach Aufschieben der trockenen, gerafften Kunstdarmhüllen 11 diese gegen Abrutschen sichern. Am gegenüberliegenden Ende der Federzungen 18, also dem der sternförmigen Halterung 8 zugewandten Ende können die Kunstdarmhüllen 11 beim Aufschieben auf die Träger 10 jeweils noch mit einem Gummiring 20 gesichert sein. Mit entsprechendem Aufwand ist es auch möglich, anstelle dieser Gummiringe 20 eine automatisch arbeitende, mechanische Klemmvorrichtung vorzusehen.

Die Wirkung der Federzungen 18 der Träger 10 kann durch eine oder mehrere weitere Federn 36 unterstützt werden, die auf einem Rohr 38 angeordnet sind, welches seinerseits an der sternförmigen Halterung 8 befestigt ist. Wie in der Zeichnung gezeigt, lassen die Federn 36 nur einen vergleichsweise geringen Raum bezüglich der Federzungen 18 frei, so daß die Kunstdarmhüllen 11 zusätzlich zur Wirkung der Federzungen 18 gegen Abrutschen von den Trägern 10 gesichert sind. Die Zeit für einen einmaligen Umlauf der sternförmigen Halterung 8 und somit jeder einzelnen Kunstdarmhülle 11 ist so bemessen, daß eine ausreichende Bewässerung der Kunstdarmhüllen 11 erfolgt.

In diesem Zusammenhang sei noch erwähnt, daß die Wanne 4 mit einem Filter 22 und einer Pumpe 24 für das wäßrige Medium versehen ist, so daß dieses durch Umpumpen über die Leitungen 26, 28, 30 einem kontinuierlichen Reinigungsprozeß unterzogen wird. Weiterhin ist noch zur Einstellung der jeweils gewünschten Temperatur in der Wanne 4 eine thermostatisch geregelte Heizung 32 für das wäßrige Medium eingebaut. Auch ein Schwimmschalter kann vorgesehen sein.

Das Rohr 38 erbringt neben der Befestigungsmöglichkeit für die Federn 36 den weiteren Vorteil, daß es die frei zugängliche Oberfläche des Wassers in der Wanne 4 einschränkt und so einem übermäßigen Verschmutzen desselben vorbeugt.

Fluchtend mit dem zur Übergabe der gewässerten Kunstdarmhülle 11 bereiten Träger 10a ist gemäß Fig. 1 und Fig. 2 ein Füllrohr 40 eines Revolverkopfes 42 einer nicht näher gezeigten Füllmaschine 44 für pastöses Füllgut gezeigt. Der Revolverkopf 42 mit mehreren Füllrohren 40, 40′ ist um eine Achse 46 verschwenkbar gelagert. Die Achse 46 ist in einer Grundplatte 48 fest angeordnet. Der Antrieb des Revolverkopfes 42 um diese Achse 46 erfolgt über ein Zahnradritzel 50, das in die am Umfang des Revolverkopfes 42 vorgesehenen, korrespondierenden Zähne eingreift. Bei Antrieb des Ritzels 50 über ein Schrittgetriebe 52 wird demgemäß auch der Revolverkopf 42 schrittweise in Drehung versetzt, und zwar derart, daß bei jedem zweiten Schalt- oder Arbeitsschritt der Halterung 8 jeweils die Beschickung des Füllrohres 40 an der Stelle erfolgt, an der ein Träger 10a mit diesen fluchtet.

Die Grundplatte 48 des Revolverkopfes 42 ist mittels einer Überwurfmutter 54 an die Füllmaschine 44 angeflanscht, das Füllrohr 40 und das Füllrohr 40′ über je eine Überwurfmutter 56 bzw. 56′ an den Revolverkopf 42.

Auf der Achse 46 sind weiterhin zwei Darmbremsen 58 und 58′ gelagert, und zwar über ein Gehäuse 60, das fest mit dem Revolverkopf 42 über ein Rohr 62 verbunden ist, so daß sich die beiden Darmbremsen 58, 58′ synchron mit dem Revolverkopf 42 drehen. Die Darmbremsen 58, 58′ sind jeweils über einen Hebel 64, 64′ an dem Gehäuse 60 angelenkt, und so an diesem über Bolzen 66, 66′ verschwenkbar.

Der Schwenkantrieb der Darmbremsen 58, 58′ erfolgt über einen Antrieb 68, 68′, im vorliegenden Fall Druckluftzylinder, wobei die hin- und hergehenden Kolbenstangen 70, 70′ ihrerseits an Darmbremsenhaltern 72, 72′ der Darmbremsen 58, 58′ über Bolzen 74, 74′ angelenkt sind. Beim Ein- und Ausfahren der Kolbenstangen 70, 70′ sind somit die Darmbremsen 58, 58′ beispielsweise aus der einen in Fig. 1 gezeigten Stellung in die dort gezeigte andere Stellung verschwenkbar; vgl. auch die Darmbremsenhalter 72, 72′ gemäß Fig. 2 und 3. Zur Beaufschlagung der Arbeitsräume der Antriebe 68, 68′ ist die Achse 46 mit Bohrungen 76 versehen, die als Zuleitungen für das Arbeitsmittel dienen.

Der Arbeitsablauf der bisher beschriebenen Vorrichtung ist wie folgt: Die gemäß Fig. 1 auf dem Träger 10a befindliche Kunstdarmhülle 11 hat bereits die Wanne 4 durchlaufen und ist somit gewässert und zur Übergabe auf das fluchtend zu ihr verlaufende Füllrohr 40 des Revolverkopfes 42 bereit. Zu diesem Zwecke wird sie mittels eines beispielsweise gleichfalls über Druckluft angetriebenen gabelförmigen Mitnehmers 78 von dem Träger 10a nach rechts auf das Füllrohr 40 unter Überwindung der Kraft der Federzungen 18 sowie der Feder 36 geschoben. Bei dieser Übergabe wird weiterhin eine zusätzliche Feder 80 überwunden, die im vorliegenden Fall am Taktgetriebe 12 angeordnet ist. Diese Feder 80 sichert die auf dem Füllrohr 40 aufgeschobene gewässerte Kunstdarmhülle 11 gegen Abrutschen, nachdem der gabelförmige Mitnehmer 78 in seine in Fig. 1 gezeigte Ausgangsstellung zurückgekehrt ist.

Sodann schaltet das Taktgetriebe 12 die sternförmige Halterung 8 um einen Arbeitsschritt weiter, wodurch der Träger 10a in der Mitte zwischen den in Fig. 2 gezeigten Positionen des Trägers 10a und 10b angeordnet wird. Diese Lage ist in Fig. 3 gezeigt. In dieser Position kann nunmehr die Darmbremse 58 auf das Füllrohr 40 aufgeschwenkt werden. Dies erfolgt durch taktgesteuerte Betätigung des Antriebs 68. Auf diese Weise erfolgt nunmehr eine Festlegung der Kunstdarmhülle 11 auf dem Füllrohr 40′ mittels der Darmbremse 58′.

Hier sei erwähnt, daß an der sternförmigen Halterung 8 naturgemäß eine von der Zahl sechs abweichende Anzahl von Trägern vorgesehen werden kann. In diesem Falle muß dann, wie ohne weiteres einzusehen ist, das Taktgetriebe 12 jeweils die doppelte Anzahl von Schaltschritten wie Anzahl der vorhandenen Träger 10 ausführen.

Als nächsten Arbeitsschritt führt der Revolverkopf 42 zusammen mit den Füllrohren 40 und 40′ sowie den beiden Darmbremsen 58, 58′ eine Drehung um 90° aus, wodurch der Darmbremsenhalter 72 in die Stellung 82 und der Darmbremsenhalter 72′ in die Stellung 84 gemäß Fig. 3 kommen. In der Stellung 84 des Darmbremsenhalters 72′ wird der auf dem Füllrohr 40′ nach abgeschlossenem Füllvorgang verbliebene Rest der Kunstdarmhülle 11 abgeworfen. Bei der 90°-Verschwenkung des Darmbremsenhalters 72′ in die Stellung 84 wird dieser jedoch zugleich von dem Füllrohr 40′ abgeschwenkt entsprechend der Position des Darmbremsenhalters 72 nach Fig. 1. Unmittelbar nach dem Abwerfen des Endes der Kunstdarmhülle 11 vom Füllrohr 40′ erfolgt eine weitere Verschwenkung des Revolverkopfes 42 Richtung des Pfeiles 86 um 90°, so daß dann der Darmbremsenhalter 72′ nach Fig. 3 die ursprüngliche gezeigte Stellung des Darmbremsenhalters 72 ebenfalls gemäß Fig. 3 einnimmt. Die Erschöpfung des Vorrates an verfügbarer Kunstdarmhülle 11 wird durch einen fotoelektrischen Näherungsschalter 73 erfaßt, über den dann die Verschließmaschine und die Füllmaschine 44 abgeschaltet werden.

Sobald der Darmbremsenhalter 72′ die Position 84 gemäß Fig. 3 erreicht hat, kann auch die sternförmige Halterung 8 einen weiteren Taktschritt ausführen, wodurch dann der Träger 10d gemäß Fig. 3 die Position des Trägers 10a gemäß Fig. 2 einnimmt.

Wie bereits erwähnt, können nach Überführen der Kunstdarmhülle 11 vom Träger 10a auf das Füllrohr 40 nach Ausführen zweier weiterer Taktschritte der sternförmigen Halterung 8 der dann leere Träger 10a bequem von Hand wieder mit einer Kunstdarmhülle 11 beschickt werden. Gemäß Fig. 2 kann dies vorzugsweise gleichzeitig bei den Trägern 10b und 10c nach Fig. 2 erfolgen, da diese sich außerhalb der Wanne 4 befinden.

Das Füllrohr 40′ und die Füllmaschine 44 sind nunmehr bereit, die auf ersterem angeordnete Kunstdarmhülle 11 zu befüllen. Die Befüllung erfolgt taktweise in den gewünschten Portionen über die Füllmaschine 44. Die Bildung der einzelnen Portionen erfolgt unter Einwirkung von Verdrängerscherenpaaren 88, 90, die jeweils einen Zopf 92 bilden, und Setzen von Verschlußklammern 94 an den Zopfenden. Auf diese Weise werden beispielsweise einzelne Würste 96 abgepackt.

Zu Beginn eines jeden Füllvorganges einer frischen Kunstdarmhülle 11, vgl. Fig. 1, erhält man aufgrund des vorher nicht mehr unter Druck stehenden Füllrohres 40′ eine gewichtsungenaue erste Portionspackung, beispielsweise eine gewichtsungenaue Wurst, da beim gänzlichen Abziehen der vorher auf diesem selben Füllrohr 40′ angeordneten Kunstdarmhülle 11 in der Regel eine gewisse Menge des Füllgutes aus dem Füllrohr 40′ ausläuft. Bei der anschließenden ersten portionsweisen Befüllung der folgenden Kunstdarmhülle 11 fehlt somit ein gewisser Teil des Füllgutes im Füllrohr 40′ und außerdem herrschen andere Druckverhältnisse vor, d. h., die erste portionsweise Befüllung erfolgt unter verringertem Druck, was die Dosierung der Portionen zusätzlich ungenau beeinflußt. Bisher nimmt man diese Ungenauigkeit entweder in Kauf oder streift die gebildete Wurst aus und gibt das Füllgut zurück in den Behälter der Füllmaschine 44.

Die Erfindung vermeidet diesen Nachteil im wesentlichen dadurch, daß sie eine Greiferzange 98 vorsieht, die durch die Verdrängerscherenpaare 88, 90 hindurchgreift, die Kunstdarmhülle 11 an ihrem Anfang 112 erfaßt und um einen relativ kleinen Betrag vom Füllrohr 40′ abzieht, worauf dann eine ebenfalls relativ kleine Menge an Füllgut ausgestoßen wird und anschließend in der üblichen Weise zwei Verschlußklammern 94 gesetzt werden; dann wird die so gebildete Anfangsportion von der nachfolgenden Wurstkette zwischen den beiden gesetzten Verschlußklammern 94 abgetrennt. Diese Anfangsportion kann entweder verworfen werden, da es sich nur um eine relativ geringe Menge handelt; oder es kann der Inhalt dieser Packung wiederum in den Behälter der Füllmaschine 44 zurückgegeben werden. Es herrschen im Anschluß an diese Anfangsportion dann die gewünschten konstanten Verhältnisse vor, so daß gewichtsgenaue Portionen in der üblichen Weise abgepackt werden können.

Im übrigen sei jedoch noch darauf hingewiesen, daß die erfindungsgemäße Greiferzange 98 in jedem Falle für den automatischen Ablauf von Wässerung der Kunstdarmhülle 11 über Übergabe auf das Füllrohr 40 und portionsweises Abpacken vom Füllrohr 40′ von Bedeutung ist, da sie ebenfalls über die Verschließmaschine taktgesteuert automatisch den Anfang 112 einer jeden neuen Kunstdarmhülle 11 erfaßt und durch die Verdrängerscherenpaare 88, 90 herauszieht.

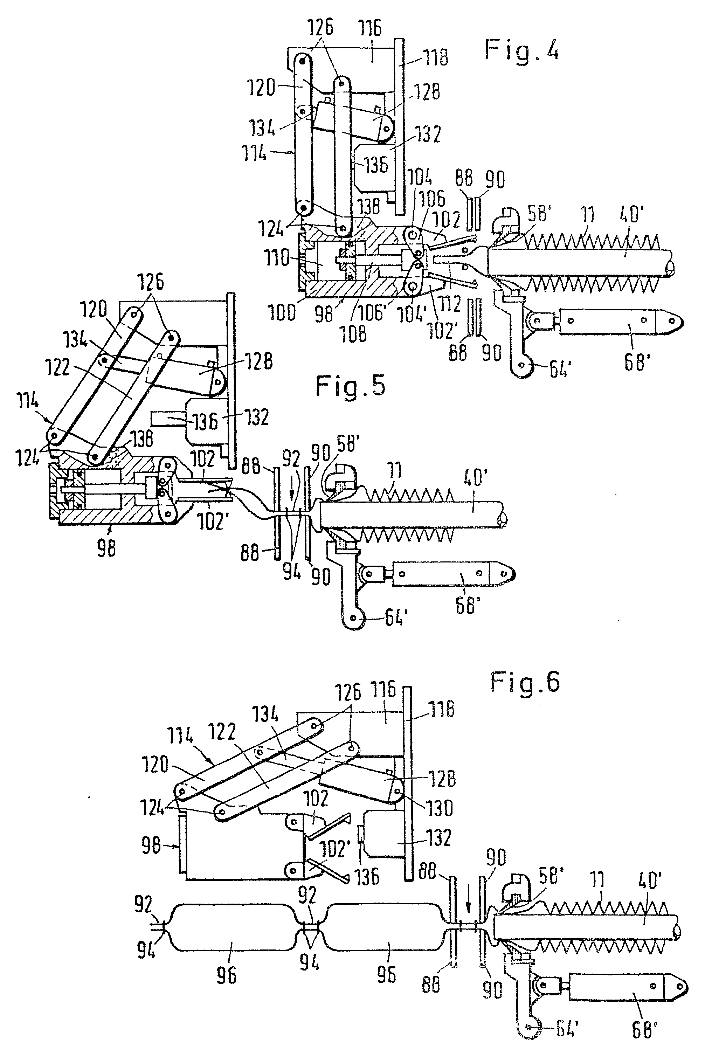

Im folgenden sei nunmehr unter Bezugnahme auf die Fig. 4 die Greiferzange beschrieben, die insgesamt mit 98 bezeichnet ist.

Sie besteht im wesentlichen aus einem druckmittelbetätigten Zylinder 100, der vorzugsweise mit Druckluft beaufschlagt wird. An dem dem Füllrohr 40′ zugewandten Ende sind am Zylinder 100 zwei Zangenschenkel 102, 102′ über Bolzen 104, 104′ angelenkt. Jeweils ein Ansatz 106, 106′ ist wiederum an einen Kolben 108 des Zylinders 100 angelenkt, so daß bei Hin- und Herbewegung des Kolbens 108 aufgrund Beaufschlagung einer Zylinderkammer 110 des Zylinders 100 die Zangenschenkel 102, 102′ geschlossen und geöffnet werden. Gemäß Fig. 4 befinden sich die Zangenschenkel 102, 102′ in ihrer geöffneten Stellung kurz vor dem Ergreifen eines freien Endes oder Zipfels 112 der Kunstdarmhülle 11.

Die Greiferzange 98 ist über eine Parallelogramm-Schwenkvorrichtung 114 verschwenkbar an einer Stütze 116 gelagert, die ihrerseits fest über eine Platte 118 mit der Verschließmaschine verbunden ist. Die Parallelogramm-Schwenkvorrichtung 114 besteht, wie gezeigt, aus den Armen 120, 122, die einerseits über Bolzen 124 mit dem Zylinder 100 und andererseits über Bolzen 126 an der Stütze 116 angelenkt sind.

An der Platte 118 ist weiterhin ein druckmittelbetätigter Arbeitszylinder 128 über einen Bolzen 130 verschwenkbar sowie ein druckmittelbetätigter Arbeitszylinder 132 fest angeordnet. Beide Arbeitszylinder 128 und 132 werden wiederum vorzugsweise mit Druckluft betätigt.

Bei der in Fig. 4 gezeigten Stellung sind die Kolben 134 und 136 dieser Arbeitszylinder 128, 132 eingefahren. Die Greiferzange 98 nimmt diese Stellung ein, wenn der Revolverkopf 42 und somit das Füllrohr 40′ die in Fig. 1 gezeigte Stellung einnimmt (die in Fig. 1 gezeigte Vorrichtung setzt in der Vorrichtung nach Fig. 4 fort). Die Verdrängerscherenpaare 88, 90 sind hierbei so weit geöffnet, daß die Greiferzange 98 in die gezeigte Stellung im Bereich der Darmbremse 58′, die auf dem Füllrohr 40′ eingeschwenkt ist, verbracht werden kann. In diesem Zustand wird dann der Zylinder 100 über eine Einlaßleitung 138 mit Druckmittel beaufschlagt, so daß sich der Kolben 108 vom Ende des Füllrohres 40′ weg bewegt, und die Greiferzange 98 schließt und hierbei das Ende 112 der Kunstdarmhülle 11 erfaßt und abzieht. Sobald die Greiferzange 98 geschlossen hat, wird auch der Arbeitszylinder 132 beaufschlagt, dessen Kolben 136 mit der Parallelogramm-Schwenkvorrichtung 114 zusammenwirkt, so daß die Greiferzange 98 aus dem Bereich der Verdrängerscherenpaare 88, 90 und der nicht dargestellten Verschließorgane geschwenkt wird.

Bei Erreichen der Stellung gemäß Fig. 5 wird die Füllmaschine 44 auf eine kleine Portion geschaltet, es erfolgt die Füllung der Kunstdarmhülle 11 mit dieser kleinen Portion und sodann schaltet die Verschließmaschine ein. Es erfolgt unter Auseinanderbewegen der Verdrängerscherenpaare 88, 90 und Setzen von Verschlußklammern 94 sowie Trennen des Zopfes 92 ein Verdrängungs- und Verschließvorgang.

Bevor die mit der kleinen, gewichtsungenauen Portion gefüllte Wurst gebildet wird, sorgt der Arbeitszylinder 128 mit seinem Kolben 134 dafür, daß die Greiferzange 98 aus dem Ausstoß- und Ablaufbereich des Füllrohres 40′ geschwenkt wird; vgl. Fig. 6. Die Greiferzange 98 wird geöffnet, und die von ihr bis zu diesem Zeitpunkt noch gehaltene kleine Wurst wird abgeworfen, beispielsweise auf eine nicht gezeigte Rutsche.

Sodann schaltet die Verschließmaschine auf normalen Portionsbetrieb, da jetzt im Füllrohr 40′ konstante Verhältnisse vorherrschen.

Wie sich aus Fig. 1 ergibt, erfolgt in der Wanne 4 sowohl eine Außen- als auch Innenbewässerung der Kunstdarmhüllen 11.

## Patentansprüche

1. Vorrichtung zum vorbereitenden Behandeln von gerafften Kunstdarmhüllen und zum anschließenden Beschicken eines Füllrohres eines der Füllmaschine vorgebauten Revolverkopfes mit mehreren Füllrohren (40, 40′), wobei dem in Füllstellung befindlichen Füllrohr (40′) eine Verschließvorrichtung zugeordnet ist, gekennzeichnet durch eine der Füllmaschine zugeordnete Bewässerungseinrichtung (2) mit mehreren Trägern (10) zur Aufnahme der gerafften Kunstdarmhüllen (11), wobei die Träger (10) mit ihrem einen Ende an einer in der Bewässerungseinrichtung (2) umlaufenden Halterung (8) gelagert sind, und eine Übergabeeinrichtung für die gewässerten, gerafften Kunstdarmhüllen (11) von den Trägern (10) auf das Füllrohr (40), wobei jedem Füllrohr (40, 40′) eine mit diesem umlaufende Darmbremse (58, 58′) zugeordnet ist, die derart verschwenkbar angeordnet ist, daß in der Übergabeposition die Darmbremse (58) aus dem Arbeitsweg der Übergabeeinrichtung vom Füllrohr (40) abgeschwenkt und die dem in Füllposition befindlichen Füllrohr (40′) zugeordnete Darmbremse (58′) auf letzteres aufgeschwenkt ist.

2. Vorrichtung nach Anspruch 1, dadurch gekennzeichnet, daß an den Trägern (10) Federzungen (18) zum Zurückhalten der aufgeschobenen Kunstdarmhüllen (11) angeordnet sind.

3. Vorrichtung nach Anspruch 1, dadurch gekennzeichnet, daß an der Halterung (8) ein sich im wesentlichen über die gesamte Länge einer Wanne (4) der Bewässerungseinrichtung (2) erstreckendes, die Drehachse (6) umschließendes und mit der Halterung (8) umlaufendes Rohr (38) angeordnet ist.

4. Vorrichtung nach den Ansprüchen 1 und 3, dadurch gekennzeichnet, daß an der Bewässerungseinrichtung (2) eine Feder (80) zum Sichern der auf dem Füllrohr (40) angeordneten Kunstdarmhüllen (11) vorgesehen ist.

5. Vorrichtung nach den Ansprüchen 1 und 3, dadurch gekennzeichnet, daß die sternförmige Halterung (8) schrittweise während eines Umlaufs antreibbar ist.

6. Vorrichtung nach den Ansprüchen 1, 3 und 4, dadurch gekennzeichnet, daß die Bewässerungseinrichtung (2) mit einem Zwangsumlauf durch eine Pumpe (24) für das wäßrige Medium versehen ist, sowie einen Filter (22), einen Schwimmerschalter und/oder vorzugsweise eine thermostatisch geregelte Heizeinrichtung (32) aufweist.

7. Vorrichtung nach den Ansprüchen 1 und 4, dadurch gekennzeichnet, daß dem in Füllstellung befindlichen Füllrohr (40') im Wirkungsbereich der Verschließmaschine eine Greiferzange (98) zum Erfassen und Abziehen des Anfangs (112) der Kunstdarmhülle (11) zugeordnet ist.

## Claims

1. Apparatus for a preparatory treatment of gathered synthetic sausage casings and for subsequently feeding them to a filling tube of a turret which precedes the filling machine and has a plurality of filling tubes (40, 40'), wherein the filling tube (40') which is in filling position nas a closing device associated with it, characterized by the provision of a watering device (2), which is associated with the filling machine and comprises a plurality of carriers (10) for carrying the gathered synthetic sausage casings (11), which carriers are mounted at one end on a holder (8), which revolves in the watering device (2), and a device for transferring the gathered and watered synthetic sausage casings (11) from the carriers (10) to the filling tube (40), each filling tube (40, 40') having a casing snubber (58, 58') associated with it, which revolves with the filling tube and is pivoted so that in the transfer position the casing snubber (58) is turned away from the filling tube (40) out of the working path of the filling device and the casing snubber (58') associated with the filling tube that is in filling position has been swung onto the latter.

2. Apparatus according to claim 1, characterized in that the carriers (10) are provided with spring tongues (18) for holding back the synthetic sausage casings (11) fitted on the carriers.

3. Apparatus according to claim 1, characterized in that a tube (38) which extends substantially throughout the length of a tub (4) of the watering device (2) and surrounds the axis (6) of rotation and revolves with the holder is provided on the latter.

4. Apparatus according to claims 1 and 3, characterized in that the watering device (2) is provided with a spring (80) for retaining the synthetic sausage casings (11) provided on the filling tube (40).

5. Apparatus according to claims 1 and 3, characterized in that the star-shaped holder (8) is adapted to be intermittently driven during one revolution.

6. Apparatus according to claims 1, 3 and 4, characterized in that the watering device (2) is provided with a pump (24) for a forced circulation of the aqueous fluid and comprises a filter (22), a float switch and/or preferably a thermostat-controlled heater (32).

7. Apparatus according to claims 1 and 4, characterized in that the filling tube (40') which is in filling position has associated with it gripping tongs (98), which are disposed in the range of action of the closing machine and serve to grip and pull off the leading end (112) of the synthetic sausage casing (11).

## Revendications

1. Dispositif pour le traitement préparatoire de boyaux artificiels plissés et pour le chargement ensuite d'un tube de remplissage d'un barillet placé devant la machine de remplissage et ayant plusieurs tubes de remplissage (40, 40'), un dispositif de fermeture étant associé au tube de remplissage (40') se trouvant en position de remplissage, caractérisé par un dispositif d'arrosage (2) affecté à la machine de remplissage et ayant plusieurs supports (10) de réception des boyaux artificiels plissés (11), l'une des extrémités des supports (10) étant montée sur une pièce de fixation (8) tournant dans le dispositif d'arrosage (2), et par un dispositif transférant les boyaux artificiels plissés (11) arrosés des supports (10) au tube de remplissage (40), un frein de boyau (58, 58') étant affecté à chaque tube de remplissage (40, 40'), tournant avec celui-ci et étant monté pivotant de manière à ce que, en la position de transfert, le frein de boyau (58) sorte en pivotant de la course de travail du dispositif de transfert du tube de remplissage (40) et à ce que le frein de boyau (58'), affecté au tube de remplissage (40') se trouvant en position de remplissage, vienne sur ce dernier par pivotement.

2. Dispositif suivant la revendication 1, caractérisé en ce que sur les supports (10) sont disposées des lames élastiques (18) pour retenir les boyaux artificiels (11) enfilés.

3. Dispositif suivant la revendication 1, caractérisé en ce que sur la pièce de fixation (8) est disposé un tube (38), qui s'étend sur sensiblement toute la longueur d'une cuve (4) du dispositif d'arrosage (2), qui entoure l'axe de rotation (6) et qui tourne avec la pièce de fixation (8).

4. Dispositif suivant les revendications 1 et 3, caractérisé en ce que sur le dispositif d'arrosage (2) est prévu un ressort (80) pour le blocage des boyaux artificiels (11) disposés sur le tube de remplissage (40).

5. Dispositif suivant les revendications 1 et 3, caractérisé en ce que la pièce de fixation (8) en forme d'étoile peut être entraînée pas-à-pas pendant une rotation.

6. Dispositif suivant les revendications 1, 3 et 4, caractérisé en ce que le dispositif d'arrosage (2) est muni d'une circulation forcée pour le milieu aqueux, grâce à une pompe (24), ainsi que d'un filtre (22), d'un interrupteur à flotteur et/ou de préférence d'un dispositif de chauffage (32) régulé d'une manière thermostatique.

7. Dispositif suivant les revendications 1 et 4, caractérisé en ce qu'au tube de remplissage (40') se trouvant en la position de remplissage, est affectée dans la zone active de la machine de fermeture une pince de préhension (98) pour saisir et pour retirer le début (112) du boyau artificiel (11).

# Fig.1

0 016 500

## Fig.2

## Fig.3

Fig.4

Fig.5

Fig.6